# EUROPEAN PATENT APPLICATION

(11) **EP 1 231 320 A2**
(43) Date of publication of application: **14.08.2002**
(21) Application number: 01130845.9
(22) Date of filing: 27.12.2001
(51) Int. Cl.: D21B 1/10, B09B 3/00, B26D 7/18

(54) **Device for cutting and separating toilet paper scraps**

(30) Priority: 09.02.2001 IT PR010012
(71) Applicant: Imtec Progetti S.r.l., 43100 Parma (IT)
(72) Inventor: Zoboli, Elio, 42043 Gattatico (Reggio Emilia) (IT)
(74) Representative: Gotra, Stefano

(57) **Abstract**

The device is in the field of devices destined for the production of rolls of toilet paper or the like. Scraps (2) deriving from cutting the rolls of toilet paper or the like are held by a plurality of grip elements (23) penetrating inside cardboard cores (30) of the aforesaid scraps. Horizontal movements of a carriage (7) and vertical movements of mandrels (5) allow to position the scraps (2) between cutting elements (38) which radially incise a cellulose portion (37).

## Description

The present invention relates to a device for separating cellulose from a cardboard core in scraps deriving from cutting rolling of toilet paper or the like.

Rolls of toilet paper or the like, for instance rolls of tissue paper variously used in households, are obtained starting from the production of rolls having an outer diameter equal to that of commercial rolls but with a length of even a few metres.

The rolls the user finds on the market are obtained from successive cuts of such long rolls perpendicularly to the longitudinal development thereof.

Such cuts always give rise to header scraps which cannot be placed in commerce because their length differs from the commercial length.

Said scraps are constituted, obviously like the actually usable rolls, by an inner part, called core and made of cardboard, and by an outer part constituted by pure cellulose which is a valuable, and hence costly material, unlike the aforesaid cardboard.

Currently, such scraps are discarded because there is no device with the ability to separate the cellulose from the cardboard; this fact engenders the drawback of a considerable waste of valuable material, i.e. cellulose.

The aim of the present invention is to eliminate the aforesaid drawback, making available a device that is able to separate the cellulose from the cardboard of the aforesaid scraps, thereby enabling to reuse said cellulose.

In particular, the device for separating a portion of cellulose from a core of scraps deriving from the cut of the roll of toilet paper or the like, of the present invention, is characterised in that at least a mandrel able to perform an alternating vertical displacement is provided, at its lower end, with an extractor element in which is positioned a plurality of elements for gripping the inner surface of the aforesaid core; said mandrel is supported, with the interposition of a header, to a carriage able to perform a horizontal alternating sliding motion; a first motor element, fastened to a fixed frame is able to perform the aforesaid horizontal displacement of the carriage and a second motor element, fastened to the header, is able to move the mandrel downward; to the carriage being fastened a third motor element able to rotate the extractor element about a central longitudinal axis A-A of the mandrel itself; said horizontal sliding of the carriage being able to displace the mandrel from an end of a conveyor of the scraps to a pair of cutting elements able to incise the portion of cellulose; two separate containers being able to collect respectively the aforesaid portion of cellulose and the aforesaid core as they fall.

This and other characteristics shall become more readily apparent from the description that follows of a preferred embodiment illustrated, purely by way of non-limiting example, in the accompanying drawing tables, in which:

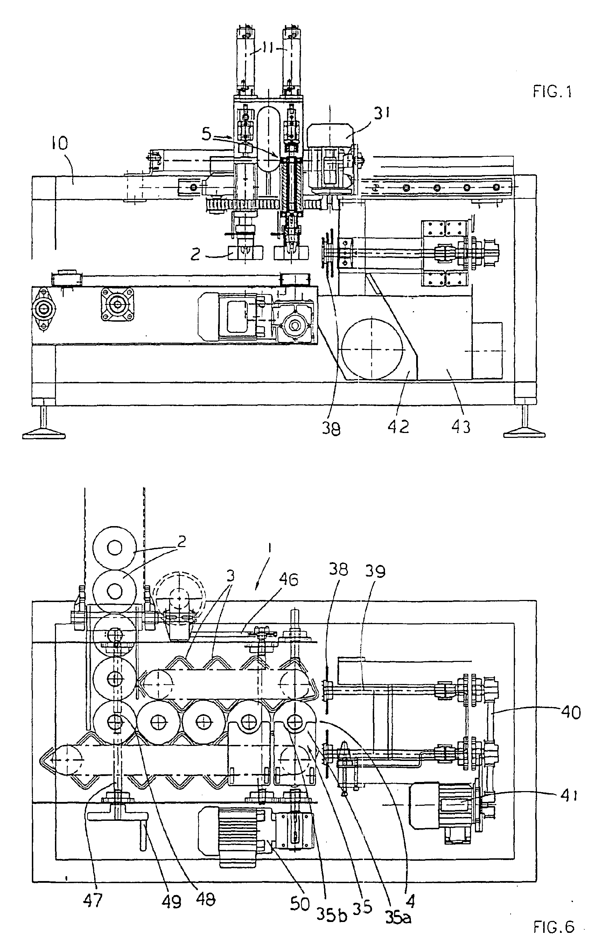

- Figure 1 shows a front view of the separator device;
- Figure 2 shows a lateral view of what is shown in Figure 1;

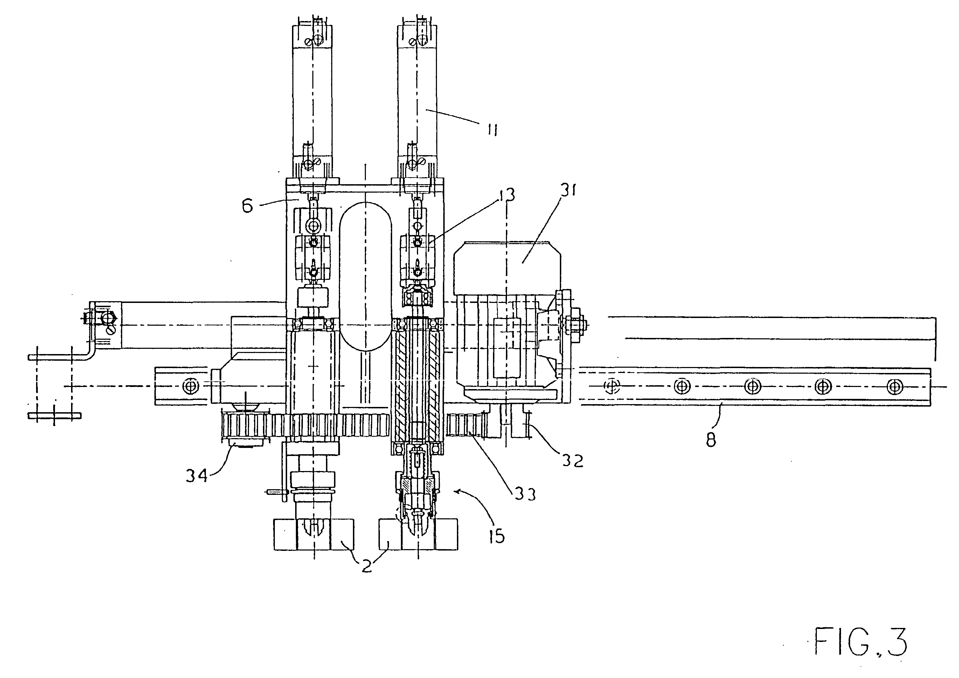

- Figure 3 shows a front view of the upper part of the device;

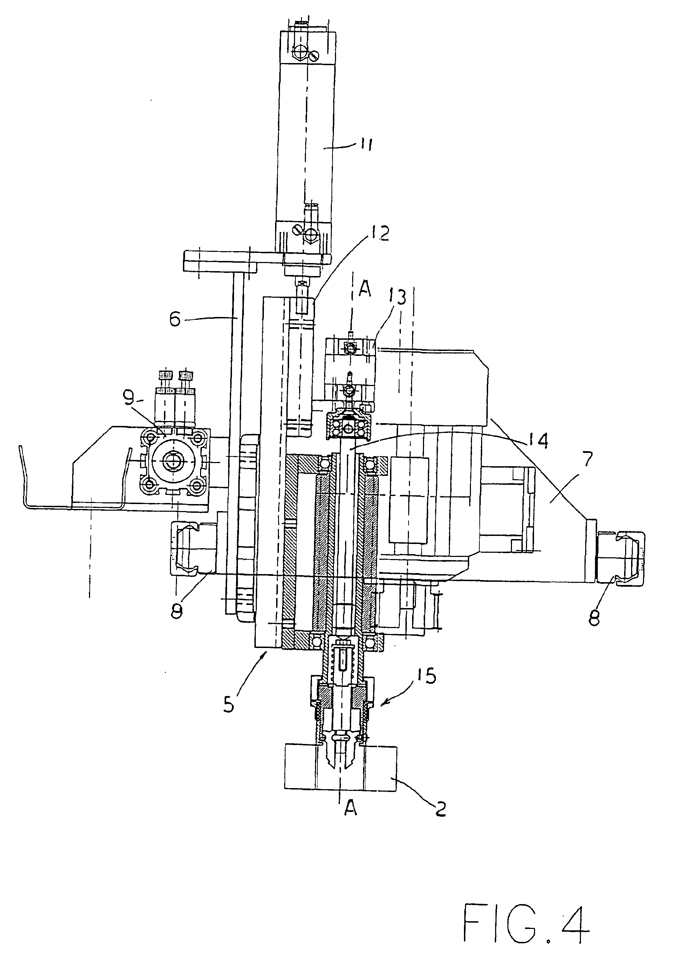

- Figure 4 shows a lateral view of what is shown in Figure 3;

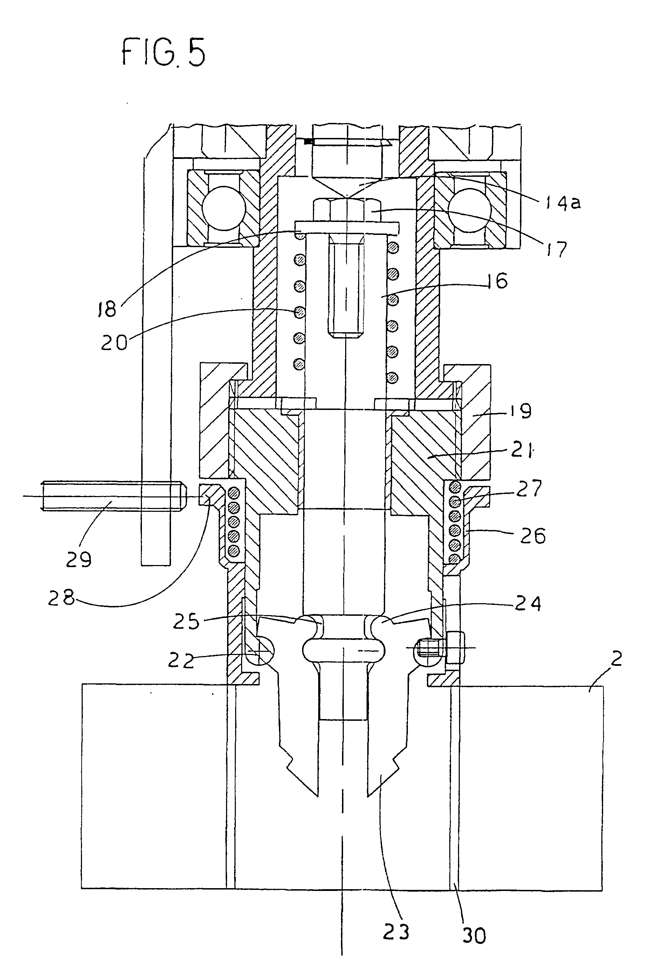

- Figure 5 shows a sectioned view of an extractor element;
- Figure 6 shows a plan view of the scrap conveyor element;

With reference to the figures, the number 1 indicates a scrap conveyor 2 provided with elements 3 for holding the tubes in such a way that the tubes, during their advance, are always set down on a horizontal plane by one of their bases.

Two mandrels 5 are positioned, according to respective two central longitudinal axes A-A, superiorly to the last two scraps which are located at an outlet end 4 of the aforesaid conveyor. Said two mandrels are mutually distanced by a pitch corresponding to the pitch whereby the scraps 2 are made to advance on the conveyor 1.

Said mandrels are fastened to a header 6, in turn fastened to a carriage 7 provided with two mutually parallel horizontal guides 8.

A first motor element 9, which in the illustrated embodiment is constituted by a preferably pneumatic cylinder, fastens the carriage 7 to a fixed frame 10; the positioning of said first pneumatic cylinder is such that the extension of its stem takes place horizontally. To the header 6 are also fastened two second motor elements 11, which in the illustrated embodiment are constituted by two preferably pneumatic cylinders; the positioning of said second cylinders 11 is such that the direction of action of their stems is vertical.

Each of said stems is fastened to a vertical slide 12 connected to an extractor element 15. A pivot pin 14 positioned according to the axis A-A connects a piston 13 with the extractor element 15.

To the lower end of each mandrel 5 is positioned the extractor element 15 within which is contained a second pivot pin 16 whose axis also coincides with the axis A-A.

The coupling between the first pivot pin 14 and the second pivot pin 16 is by simple contact obtained, respectively, by means of an end 14a and the head of a bolt 17. Said bolt fastens to the upper end of the second pivot pin 16 a cap 18; between said cap and a gear 19 positioned inferiorly is held a first elastically deformable element, in the illustrated embodiment constituted by a cylindrical spring 20.

Inside the extractor element 15 is also positioned a circumferential body 21 bearing at its lower end a plurality of pivots 22; to each of said pivots is freely fastened a grip element 23 provided with an articulation 24 so shaped as to be housed inside a throat 25 circumferentially obtained in proximity to the lower end of the second pivot pin 16.

Between the circumferential body 21 and an external collar 26 is positioned a second elastically deformable element 27, which in the illustrated embodiment is constituted by a cylindrical spring, and an end stop 28 is circumferentially obtained on the outer surface of the external collar 26. A position sensor 29 is situated externally to the aforesaid external collar and separated therefrom.

The external collar 26 has its outer diameter greater than the inner diameter of a core 30 of the scrap 2 corresponding, at least, to the outer diameter of the core itself.

To the output shaft of a third motor element 31, which in the illustrated embodiment is constituted by an electric motor, is keyed a first pulley 32 about which is wound a toothed belt 33 which, tensioned between said first pulley and a second pulley 34, enables both extractor elements 15 to rotate.

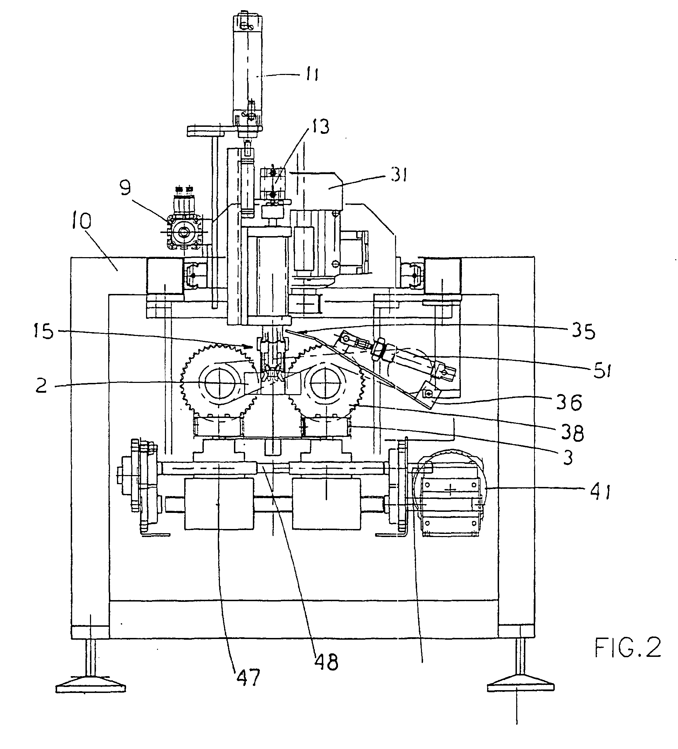

As shown in Figures 2 and 6, an oscillating fork 35, fastened to a pivot 36, is positioned in correspondence with each mandrel 5 and separated therefrom in such a way that its upper end 35a is at the same height as each extractor element 15; each of said upper ends bears a slot 35b, opened towards the respective mandrel, centred with the axis A-A thereof; each of said slots has a greater width than the outer diameter of the external collar 26 and each of the upper ends 35a has a width substantially corresponding to the outer diameter of the scrap 2. The number 51 indicates a low-pressure pneumatic cylinder which commands the lowering of the fork on the scrap 2. Facing the end 4 of the conveyor 1 is positioned a pair of cutting elements 38, in the illustrated embodiment constituted by two disk blades, each of which is provided with its own drive shaft 39; said drive shafts are connected, by means of a second toothed belt 40, to a single motorisation 41.

The distance between the axes of the two drive shafts 39 is such that the distance between the cutting ends of the two blades 38 that face each other barely exceeds, by about 2/3 millimetres, the outer diameter of the core 30.

Underneath the pair of blades 38 are positioned two separate containers, respectively 42 for the cellulose portions and 43 for the cores 30

As Figure 6 more clearly shows, the conveyor 1 has the capability of regulating the distance of the elements holding the rolls. The conveyor is formed by two toothed belts with teeth constituted by triangular neoprene inserts vulcanised with the rubber belts. Two opposite cradles are thereby created, which hold the rolls centred and distanced by a pitch that coincides with the distance between the axes A-A of the two extractor sets.

Depending on the diameter of the rolls, it is necessary to move the holding elements while leaving the axis of sliding unchanged; to do so, a crank 49 is provided, keyed on a right and left threaded bar 48 which is inserted in two opposite screw nuts 47 (one on the right portion of the threaded bar and one on the left portion of the threaded bar). Each of the two screw nuts is integral with the corresponding support of the toothed belt.

At the opposite side of the crank is provided a chain transmission 46 to effect the same motion also in the final part of the two belts.

The number 50 indicates the motorisation of the conveyor.

The operation of the present invention shall now be described, following the references indicated in the figures.

When the conveyor 1 is started, the scraps 2 are made to advance towards the outlet end 4 of the conveyor itself; said advance occurs intermittently with an advance which, in the illustrated embodiment, corresponds to the advance of two scraps 2 per cycle. Said scraps are always held at the same mutual distance by the holding elements 3 integrally fastened to the movable elements of the conveyor 1.

When two scraps 2 reach the last two stations of the aforesaid conveyor they are positioned underneath the respective mandrels 5.

At this point each of the two pneumatic cylinders 11 causes an extension of its stem and consequently the lowering of a slide able to slide vertically. Said slide carries the whole set of mandrels, including the two rotation pulleys of the mandrels themselves. In this way, each of the two extractor elements 15 is lowered according to the axis A-A of each mandrel 5.

The descent continues with the mandrels closed until the end stop 28 positions itself in front of the position sensor or detector 29 which commands the descent of the cylinder 13 and hence of the second pivot pin 16 which commands the opening of the jaws 23 which hitch to the core on its inner surface, locking it radially.

Since the scraps 2 generally have mutually different heights, the lowering of each extractor element 15 is regulated not only by a second spring positioned in its interior but also by the end stop 28 and, lastly, by the position sensor 29. When one of the external annular elements 26 bears down on the thickness of the related core 30, the aforesaid continuation of the lowering of the first pivot pin 14 and of the second pivot pin 16 leads to the compression of the second spring 27 and to the positioning, which differs from scrap to scrap, of the end stop 28 in front of the respective position sensor 29; the activation of said sensor determines the operation of the piston 13.

At this point the stem of each of the cylinders 11 returns upwards and the mandrels 5 can rise again under the thrust of the first springs 20; simultaneously, the electric motor 31 is operated and effects the rotation of both extractor elements. Said rotation, connected to the rise of the mandrels 5 and to the bearing of the oscillating fork 35 down against the cellulose portion 37 of each scrap 2, should cause the detachment of the aforesaid cellulose portion from the respective core 30. The conditional was used because it is not always so, since the end of the cellulose ribbon in contact with the aforesaid core is glued thereto and said gluing of the cellulose to the core could occasionally be particularly strong.

If the aforesaid detachment does not take place under the action of the oscillating fork 35, the first pneumatic cylinder 9 longitudinally moves the carriage 7 and, ultimately, the scraps 2 that have not been separated, until positioning said scraps above the pair of disk blades 38 which are set in rotating motion by their single motorisation 41; once a scrap 2 is positioned above said blades, the pneumatic cylinder pertaining to the mandrel 5 bearing the not-separated scrap 2 can lower or not lower the mandrel: during said descent phase, the thickness of the cellulose portion is cut according to two mutually opposite cutting lines. Since the distance between the blades is barely greater than the outer diameter of the core 30, the desired separation of the cellulose will be obtained without damaging the cardboard core of the scrap 2.

The scraps 2 will fall into an appropriate container, both positioned below the aforesaid disk blades; the cellulose portion 37 will fall into the container 42 and the cardboard core 30 will fall into the container 43.

The advantage provided by the present invention is constituted by the fact that it allows separately to recover both the cardboard and the cellulose part of the scraps deriving from cutting rolls of toilet paper or the like and in particular it allows to recover cellulose, which is a valuable material.

## Claims

1. A device for separating a cellulose portion (37) from a core (30) of scraps (2) deriving from cutting rolls of toilet paper or the like, **characterised in that** at least a mandrel (5) able to perform an alternating vertical motion is provided, at its lower end, with an extractor element (15) in which is positioned a plurality of elements (23) for gripping the inner surface of the aforesaid core; said mandrel is supported, through the interposition of a header (6), to a carriage (7) able to perform an alternating horizontal sliding motion; a first motor element (9), fastened to a fixed frame (10) is able to effect said horizontal motion of the carriage (7) and a second motor element (11), fastened to the header (6), is able to effect the downward motion of the mandrel (5); to the carriage (7) being fastened a third motor element (31) able to rotate the extractor element (15) about a central longitudinal axis A-A of the mandrel itself; said horizontal motion of the carriage (7) being able to move the mandrel (5) from an end (4) of a conveyor (1) of the scraps (2) to a pair of cutting elements (38) able to incise the cellulose portion (37); two separate containers (42) and (43) being able to collect respectively said cellulose portion and said core as they fall.

2. Device as claimed in claim 1, **characterised in that** the plurality of the grip elements (23) has, when in a position outside the core (30), lesser size than the inner diameter of the core itself; said grip elements being able to expand against the inner surface of the core (30), when positioned inside it, by the lowering action of a cylinder (13); said expansion also being produced by the actuation of said cylinder (13).

3. Device as claimed in claims 1 and 2, **characterised in that** an external annular element (26) of the extractor element (15) has greater size than the inner diameter of the core (30), said greater size being able to perform the action of holding the scrap (2) still during the lowering of the at least one mandrel (5); a first elastically deformable element (20) is positioned inside the extractor element (15) and is able to allow a further lowering of said mandrel, in spite of the arrest of the external annular element (26) against the thickness of the core (30), said further lowering being able to cause the egress of the grip elements (23) from the body of the extractor element itself.

4. Device as claimed in claims 1 and 3, **characterised in that** inside the extractor element (15) is also positioned a second elastically deformable element (27) able to allow, together with an end stop (28) positioned on the outer surface of the external annular element (26) and also together with a position sensor (29), the adaptation of the run of said extractor element to the variable height of the scrap (2).

5. Device as claimed in claims 1, 2, and 3, **characterised in that** the first elastically deformable element is also able to allow the raising of the mandrel (5) after the grip elements (23) have expanded against the inner surface of the core (30); the action of the second motor element (11) on the mandrel (5) being only a downward thrusting action.

6. Device as claimed in claim 1, **characterised in that** the cutting elements (38) have their respective motor shafts (39) mutually parallel; said cutting elements are mutually opposite according to the respective cutting ends and the distance between said drive shafts is such that the distance between the portions of said mutually opposite cutting ends barely exceeds the outer diameter of the core (30), said excess being about 2/3 millimetres.

7. Device as claimed in claims 1 and 6, **characterised in that** an oscillating fork (35) is positioned in correspondence with the extractor element (15) and separately therefrom, said positioning being such that a slot (35b) of the fork itself, open towards the mandrel (2), is centred with the axis A-A thereof; said fork being able to bear down on the thickness of the cellulose portion (37) and said slot having a width that exceeds the outer diameter of the core (30).
